# EUROPEAN PATENT APPLICATION

(11) **EP 1 197 905 A2**
(43) Date of publication of application: **17.04.2002**
(21) Application number: 01480076.7
(22) Date of filing: 09.08.2001
(51) Int. Cl.: G06F 17/60

(54) **Method and system for dynamic tracking of a user**

(30) Priority: 20.09.2000 US 666357
(71) Applicant: INTERNATIONAL BUSINESS MACHINES CORPORATION, Armonk, NY 10504 (US)
(72) Inventor: Cato, Robert Thomas, Raleigh, North Carolina 27609 (US)
(74) Representative: de Pena, Alain

(57) **Abstract**

A system and method of the type utilizing an in-store electronic labeling system for dynamically tracking a customer as he moves about a facility is provided. The tracking system comprising an in-store processor (ISP), an electronic label that may be adapted to display information and in communication with the ISP, an electronic tag adapted to transmit an identification to the ISP via a label or receiver that is within range of the tag, and means for dynamically tracking the movement of the tag. The system may further include a point of sale terminal in communication with the ISP. The labels may display promotional offers to special customers pursuant to signals received from tags having identifying criteria for such offers.

## Description

### Technical Field

The present invention relates generally to the field of sales promotion systems, and in particular to a sales promotion system in which a user's location may be dynamically tracked and/or special price offers may be identified to specific customers or customer classes at the location of a displayed item.

### Background Information

Marketing and sales promotions are a necessary aspect of any successful commercial operation. In the retail industry it is common to offer discounted items to attract customers, accelerate the sales of manufacturer promoted products, reduce the inventory of aging and/or slow selling items, encourage shopping during certain hours and ultimately to increase revenues. Retail outlets also desire to maintain customer loyalty while attracting new customers. Customer loyalty is effected by providing fast, convenient, effective, and friendly service to the customers. One manner of achieving these goals is to offer reduced priced products to special customers. Special customers may be classified in many fashions, such as frequent shoppers, typical purchase amount, disabled customers, senior citizens, and customers with young children. For marketing purposes and as a service to customers it may be desired to track the path of customers while in a facility, such as a retail store, warehouse, or theme park.

To achieve these goals and to efficiently operate these outlets, management must maintain accurate records of current inventory, products to be ordered and when, customer demographics and the like. Typically, stores have a store computer system that maintains inventory and price information. This information is relayed from the store computer to points of sale (POS) such as registers having optical scanners for reading the bar codes on products. When items are placed on sale, the store computer must be updated and a label is typically placed adjacent to the sale item on a shelf. One of the drawbacks of this method of promotion is updating the store computer in a timely fashion so that the sales price is reflected at the POS. Systems have been deployed in many stores that utilize an electronic label that can be attached to a shelf adjacent to the various items. Each of the electronic labels has an identification number and can receive and transmit data to the store computer system utilizing hard wiring or wireless communication links. In this manner both the label and the POS systems can be updated simultaneously. These electronic labels often have a liquid crystal display (LCD) for displaying the current price of the product. While these electronic labels overcome the prior problem of maintaining advertised prices, shelf prices, and POS listed prices in sync, heretofore, they have not provided a means to identify particular promotional offers to specific customers or customer groups, and to dynamically track the location of specific customers.

It would be a benefit therefor to have a system for timely updating of advertised prices, shelf prices, and POS prices. It would be a further benefit to have a system and method of identifying specially priced items to specific customers. It would be a still further benefit to have a system and method for dynamically tracking a special customer while in a store so as to guide customers to specific promotional offers, to dynamically track customer movements, and so that store clerks can give special attention to special shoppers.

### Summary of the Invention

It is thus an object of the present invention to provide a system that identifies special priced items to specific customers when the customer is in the vicinity of the item.

It is a further object to have a device that allows an in store processor to dynamically track the location and movement of a specific customer within a store.

Accordingly, a system and method of the type utilizing an in-store electronic labeling system for dynamically tracking a customer as he moves about a facility is provided. The tracking system comprising an in-store processor (ISP), an electronic label adapted to display information and in communication with the ISP and the ISP knowing the location of each label in the facility, an electronic tag adapted to transmit an identification to the ISP via a label that is within range of the tag, and means for dynamically tracking the movement of the tag. The system may further include a point of sale terminal in communication with the ISP to maintain price correlation related to default item prices and special prices related to special customers and tag identifications.

Information such as item prices and criteria based promotional offers may be transmitted from the ISP to the labels. The tags may have customer data which can be transmitted to the labels to determine if the customer with the tag is eligible for the promotional offer.

The method of the present invention includes the steps of: communicating data, such as item price and promotional offers, from the in-store processor to the electronic labels for display; loading tag identification data related to customer information in an electronic tag and giving the tag to a customer; transmitting the tag identification via wireless communication to a label that is within range of the tag; transmitting of the received tag identification and the label identification from the label to the ISP; and processing the tag identification and the label identification in a manner to dynamically track the customer carrying the tag.

When a tag transmits identification data to a label, the label compares the identification to special offers. If a special offer is available for the item then the label displays the offer to the customer. If the customer purchases that product the special price will be credit at the point of sale terminal. If the label receives a tag identification that does not correlate to a special offer then the label will display the default item price. The wireless communication may be via radio frequency or infrared light.

It should be recognized that this invention may incorporate dynamic movement tracking of a customer or special guest and/or the offer special promotions to individuals having tags correlated with the special offers. Connection of the point of sale terminals with the ISP ensures that special offers are realized at the point of sale. Additionally, a combination of wireless and hardware methods of communication may be utilized.

The foregoing has outlined rather broadly the features and technical advantages of the present invention in order that the detailed description of the invention that follows may be better understood. Additional features and advantages of the invention will be described hereinafter which form the subject of the claims of the invention.

### Brief Description of the Drawings

For a more complete understanding of the present invention, and the advantages thereof, reference is now made to the following descriptions taken in conjunction with the accompanying drawings, in which:
**Figure 1** is an illustration of the tracking system of the present invention.
**Figure 2** is a system diagram of a data processing system, including hardware and firmware, which may be used to implement the present invention.
**Figure 3** is an illustration of the tracking system of the present invention utilizing radio frequency (RF) communication.
**Figure 4** is an illustration of the tracking system of the present invention utilizing infrared communication.
**Figure 5** is a block diagram of a customer tracking tag of the present invention.
**Figure 6** is a flowchart of a method of the tracking system of the present invention.

### Detailed Description

Refer now to the drawings wherein depicted elements are not necessarily shown to scale and wherein like or similar elements are designated by the same reference numeral through the several figures.

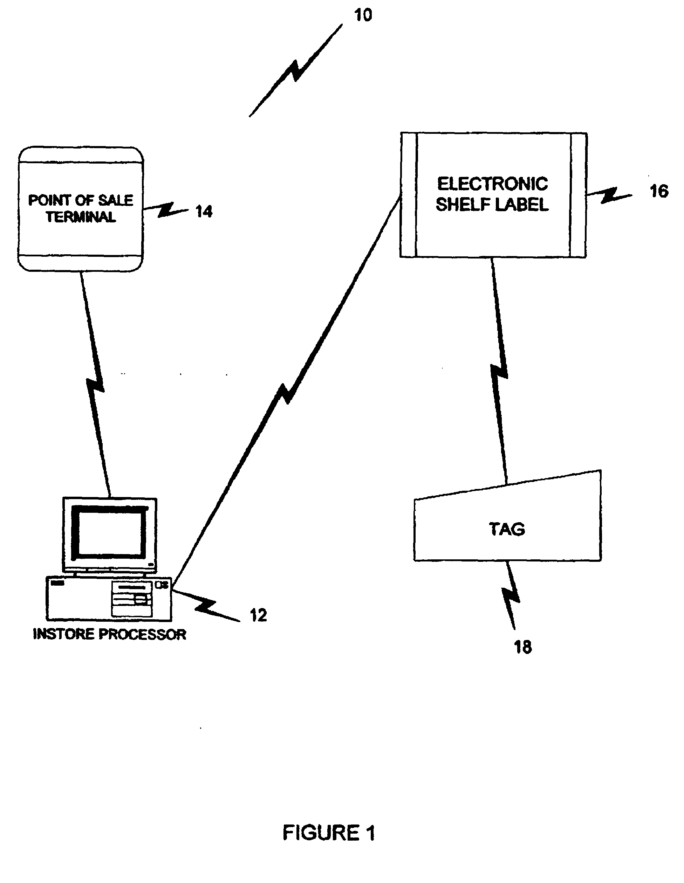

Figure 1 is an illustration of the tracking system of the present invention generally designated by the numeral 10. Tracking system 10 includes an in-store processor (ISP) 12, a point of sale terminal (such as a cash register) 14, a plurality of electronic shelf labels 16, and one or more electronic tags 18. System 10 as shown is adapted for use in a sales facility such as a grocery store. ISP 12 may be a dedicated personal computer system, a store controller, or a manager's workstation. ISP 12 may be a stand alone processor or connected to other processors, such as, but not limited to a corporate headquarters, through a network (not shown).

Tracking system elements 12, 14, 16, and 18 are adapted for intercommunication by hard wire and/or wireless communication technology. In-store processor 12 may contain inventory data, price lists, promotional offers, and customer information among other data necessary to operate a sales facility. Information such as item identification, price, promotional sales, and special offers may be transmitted from ISP 12 to labels 16 and to POS 14. Information from ISP 12 may be relayed via transponders and/or hand-held transmitters and receivers well known in the art. In this manner there is not a discrepancy between prices at the shelf and at POS 14.

Labels 16 are placed on shelves adjacent to the items they identify. The location of each label 16 in the facility may be stored in ISP 12 for tracking purposes and accurate downloading of price information. Information such as item, location, price, and promotional material may be loaded into labels 16 from ISP 12. Customers may view the downloaded information such as price, special discounts, or promotion opportunities directly from an LCD display on label 16. Labels 16 may further transmit data, such as tag 18 identification and the frequency of which price checks were performed on a particular item, back to ISP 12.

Tag 18 is capable of transmitting information to and receiving information from ISP 12 and tag 18 and may be capable of transferring information to and from POS 14. Some of the information which may be downloaded into tag 18 would be an identification number related to special customer criteria to identify available special offers downloaded into labels 16. Codes may be loaded into tag 18 which specifically identify a customer or a special customer group such as children, senior citizens, or frequent shoppers, for which special offers are available. These various codes may be emitted from tag 18 when it is in use to prompt labels 16 to transmit the identity and/or location of tag 18. Label 16 may also display a message related to information transmitted from tag 18.

When a customer enters a store or upon a customer's request, a tag 18 may be given to the customer for perpetual use or temporarily. An identification number specific to tag 18 and criteria related to the customer and/or some promotional offers may be downloaded to tag 18. Tag 18 emits signals conveying tag's 18 identification and other downloaded information. When tag 18 is within range of a label 16, the signal is received and label 16 transmits tag's 18 identification and label's 16 identification to ISP 12. ISP may then process this information and the associated location of label 16 to dynamically track the location and movement of tag 18.

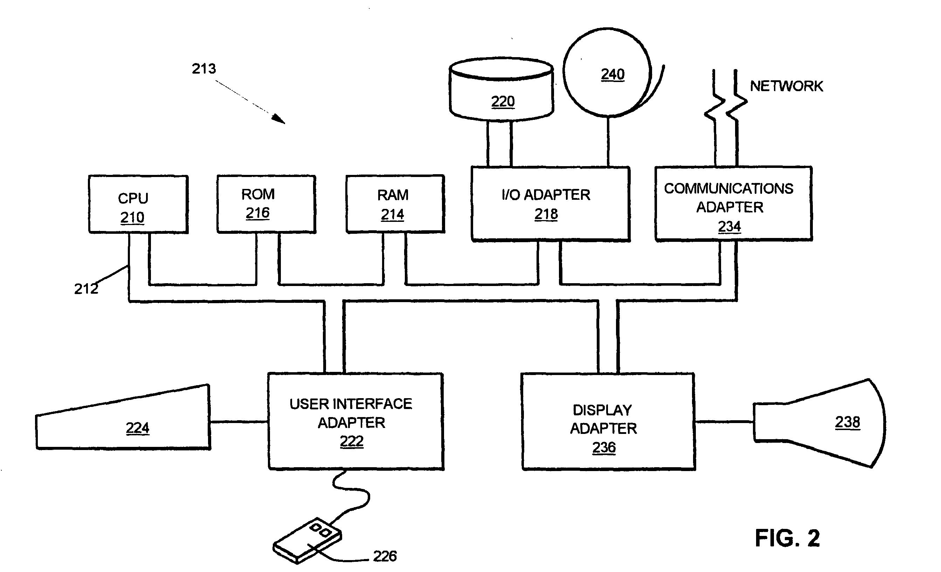

A representative hardware environment which can be used for practicing the present invention is depicted with reference to Figure 2, which illustrates the typical hardware configuration of a data processing system 213 in accordance with the subject invention. The representative system may be utilized, in whole or in part, for various elements of the present invention such as ISP 12, POS 14, label 16, and tag 18.

The data processing system 213 includes a central processing unit (CPU) 210, such as a conventional microprocessor, and a number of other units interconnected via a system bus 212. The data processing system 213 includes a random access memory (RAM) 214 and a read only memory (ROM) 216. Also included are an I/O adapter 218 for connecting peripheral devices such as disk units 220 and tape drives 240 to the bus 212, a user interface adapter 222 for connecting a keyboard 224, a mouse 226 and/or other user interface devices such as a touch screen device (not shown) to the bus 212, a communication adapter 234 for connecting the data processing system 213 to a data processing network 242, and a display adapter 236 for connecting the bus 212 to a display device 238. The CPU 210 may include other circuitry not shown herein, which will include circuitry found within a microprocessor, e.g. execution unit, bus interface unit, arithmetic logic unit (ALU), etc. The CPU 210 may also reside on a single integrated circuit (IC).

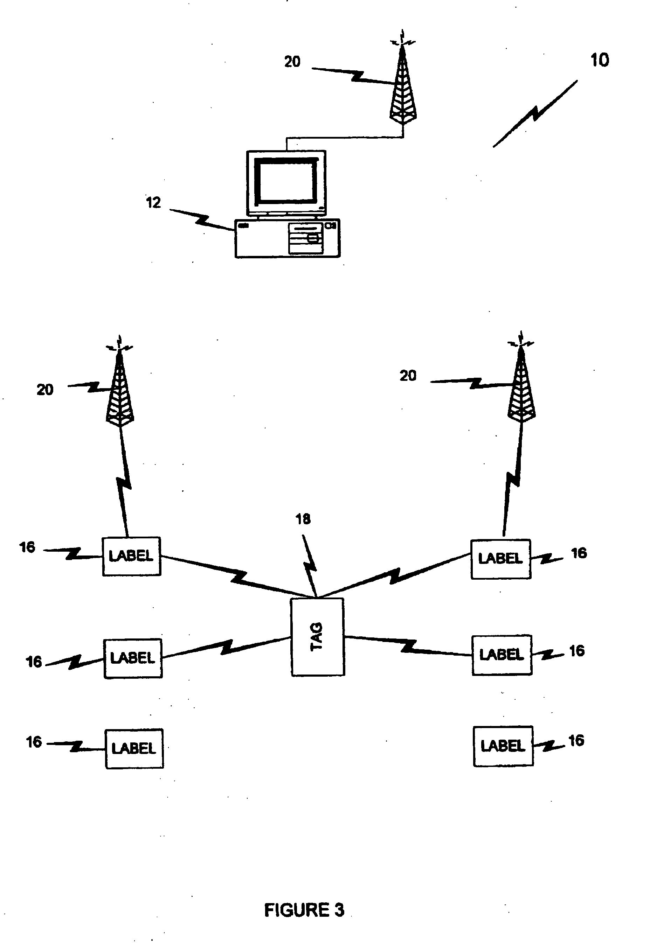

Figure 3 is an illustration of tracking system 10 of the present invention utilizing radio frequency (RF) communication. ISP 12 contains stored information such as store inventory, price lists, customer information, store diagrams, label 16 locations in the facility, and promotional information. ISP 20 may include software which allows mapping of the label location in a facility and real time movement of customers and tags 18 relative to labels 16. ISP 20 is connected to a RF link 20 for transmitting and receiving radio frequencies.

Each liquid crystal display label 16 is an independently powered, stand alone, two-way radio frequency device. Labels 16 are placed along shelves, such as in a grocery store, adjacent to a product for which is identified. As represented in Figure 3, labels 16 have been placed on two rows of shelves forming an aisle. Labels 16 will be loaded with information such as the location of label 16, the item represented, item price, and promotional offers related to customer criteria and tag 18 identification. This information may be pre-loaded and/or edited via communication from ISP 12. Labels 16 may be programmed to transmit information back to ISP 12.

Tags 18 are also independently powered, stand alone, two-way wireless communication devices. Information such as an identification number related to specific customers or customer classes may be programmed into each tag 18. Information in tags 18 may be changed utilizing transmissions from the ISP 12 system directly or via labels 16.

Tags 18 are given to customers permanently or temporarily for use while shopping. The customer may carry tag 18 on his body or it may be attached to a shopping cart. As tag 18, is carried it transmits a signal which may be received within a short range of a label 16. At least one of the signals transmitted would be tag's 18 identification number. When a label 16 receives a signal from a tag 18, it processes the information sent and may present information of particular pertinence to that identified tag 18.

Each time a label 16 receives a signal from a tag 18, label 16 will transmit a signal to ISP 12 for processing. At a minimum, label 18 will transmit its own identification indicating location and the identification of tag 18. ISP 12 may then process the information and dynamically track the movement of each tag 18. It should be noted that labels 16 are spaced in relatively close proximity to one another and tags 18 have a short transmission range, which provides dynamic, high resolution tracking of tags 18. The location of tags 18 may be viewed in real time or stored for later viewing and analysis.

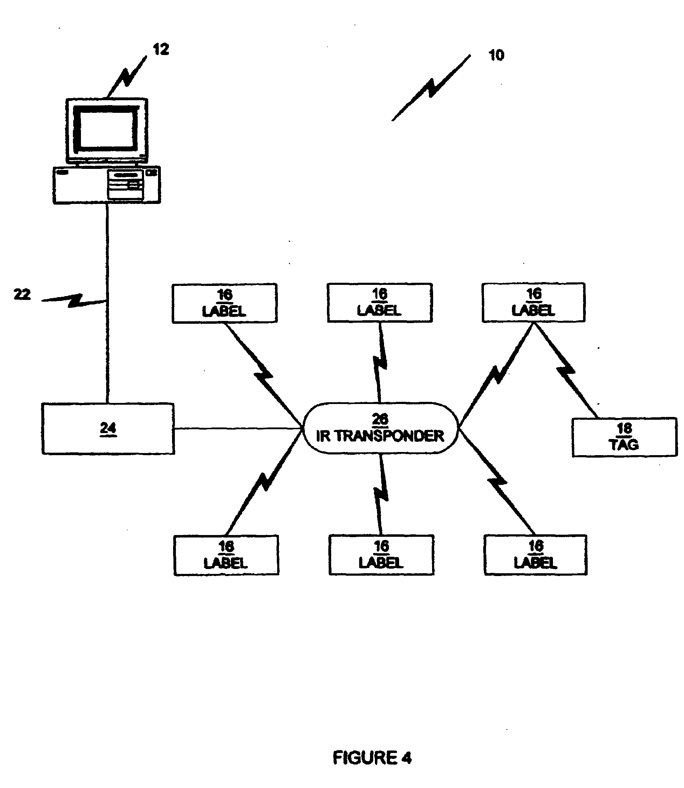

Figure 4 is an illustration of tracking system 10 of the present invention utilizing infrared communication. The embodiment shown in Figure 4 has the same features has previously described utilizing wireless radio frequency communication well known in the art. ISP 12 is connected by a cable 22 to an aisle controller 24 which is electrically connected to infrared transponder 26, which has the ability to transmit and receive by an infrared signal, desired data to and from labels 16. ISP 12 may contain databases having the product lists, product price data, label 16 location data, store layout information, and software to dynamically track tags 18. Tag 18 utilizes light emitting diodes (LED) to send infrared signals to communicate with ISP 12 via labels 16. Although not shown, it is contemplated to combine infrared and radio communication within tracking system 10 of the present invention.

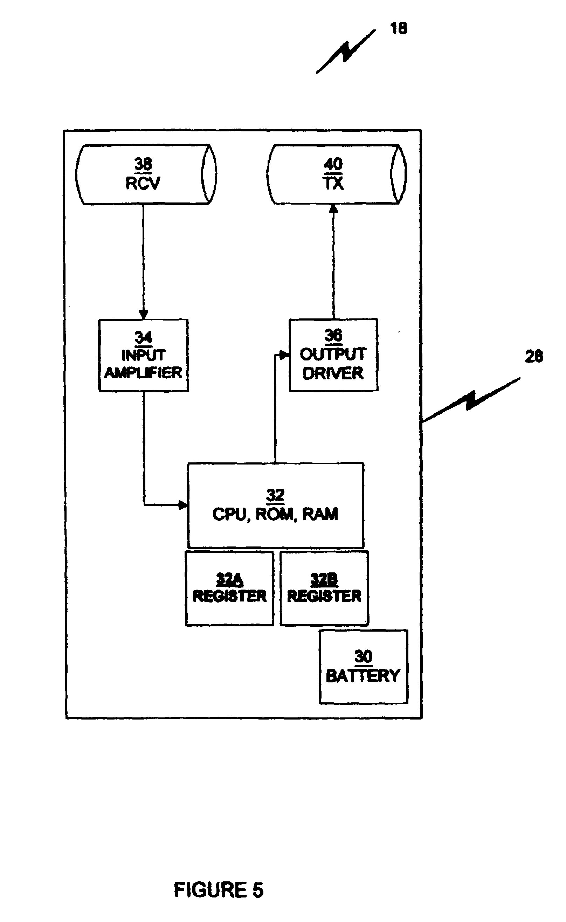

Figure 5 is a block diagram of a tag 18 of the present invention. As shown in Figure 5, tag 18 utilizes infrared communication technology and is representative of a tag utilizing radio frequency technology. Figure 5 is also exemplary, in part, of labels 16.

Tag 18 includes a housing 28 which is sized and shaped to be easily carried by a user. Tag 18 may further include attachment means for connecting tag 18 to an article of clothing, hung such as by a chain around the user's neck, or connected to a cart or basket.

The operational elements of tag 18 are powered by a battery 30. Many different types of batteries well known in the art may be utilized. The operational elements of tag 18 include a central processing unit (CPU) 32 including a tag identification register 32A and a storage register 32B, an input amplifier 34, an output driver 36, an infrared receiver 38, and an infrared transmitter 40.

CPU 32 controls the information flow from and to input amplifier 34 and output drivers 36, the storage and retrieval of information, such as, the customer specific information and the retrieval of tag's 18 identification from ID register 32A.

Storage 32B stores the customer specific information which may be loaded for individual customers or customer groups. In this manner individual tag identifications may be utilized for accurate tracking in the facility and various customer criteria may be utilized to identify the customer with special offers.

Infrared receiver 38 converts received infrared signals into electrical pulses which are then sent to input amplifier 34 and stored in storage register 32B. Infrared transmitter 40 converts electrical signals received from output driver 36 into infrared signals for transmission.

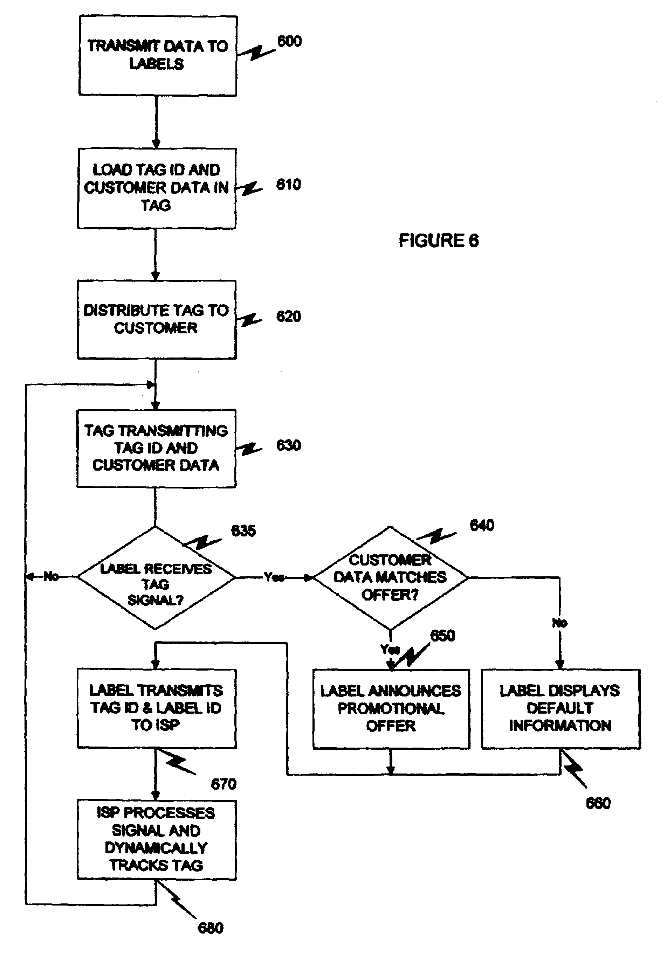

Figure 6 is a flowchart of a method of tracking system 10 of the present invention. The method of the present invention is described with reference to Figures 1 through 5. In step 600, data which is maintained in or controlled by ISP 12, such as item price, price reduction, and special offers, are transmitted electronically to labels 16 and stored therein. Special customer information related to promotional offers and a tag ID are electronically stored in a tag 18, step 610. The loaded tag 18 is distributed to a customer, step 620. In step 630, tag 18 electronically transmits signals of tag's 18 identification and the customer specific information. In step 635, label 16 continues to check for a signal from a tag 18 and continues to display default pricing information until a signal is received. When a tag 18 signal is received by a label 16, label 16 compares the customer identifying data stored in tag 18 to criteria for special offers, step 640. If tag 18 does not provide data associated with a special offer then label 16 displays default information, such as, the everyday price of the item, step 660. If tag 18 provides data associated with a special offer then label 16 will display the promotional offer, step 650. Further, when a signal is received by label 16 from tag 18, label 18 may transmit the tag identification and label identification to ISP 12, step 670. In step 680, ISP 12 may process the received tag 18 identification and label 16 identification and associated location in the facility to dynamically track the customer carrying tag 18. From the signals received by ISP 12 from labels 16, the location and movement of individual tags 18 can be dynamically tracked. This process continues until the customer leaves the store or returns tag 18 to the store.

Although the present invention and its advantages have been described in detail, it should be understood that various changes, substitutions and alterations can be made herein without departing from the scope of the invention as defined by the appended claims. It should be recognized that the present method and system may be utilized to track a user at a facility and/or to display specific sales promotion information. The label may be a wireless communication device that does not have the ability to visually display information.

## Claims

1. A system for tracking a customer in a facility comprising:
an in-store processor having a database, and software stored thereon for tracking a customer's location;
a label in communication with said in-store processor for transmitting to and receiving data from said in-store processor, said label having an identification stored thereon;
a customer tag in wireless communication with said in-store processor for sending a tag identification for said in-store processor to track said tag location.

2. The tracking system of claim 1, wherein said in-store processor transmits product data to said label for display.

3. The tracking system of claim 2, wherein when said tag is approximate said label, said label transmits said tag identification and said label identification to said in-store processor for dynamically tracking said tag.

4. The tracking system of claim 1, wherein when said tag is approximate said label, said label transmits said tag identification and said label identification to said in-store processor for dynamically tracking said tag.

5. The tracking system of claim 1, wherein said communication is via radio frequency transmission.

6. The tracking system of claim 1, wherein said wireless communication is via infrared light transmission.

7. The tracking system of claim 1, wherein said customer tag is co-located with a mobile customer capable of traveling to various locations within said facility.

8. The tracking system of claim 4, wherein said customer tag communicates with said in-store processor via said label.

9. The tracking system of claim 3, wherein said product data displayed to said customer is altered when said customer tag is approximate said label.

10. The tracking system of claim 9, wherein when said customer tag is approximate said label, said tag can communicate with said label.

11. A method of dynamically tracking a customer within a sales facility, said method comprising the steps of:
transmitting item price data from an in-store processor to an electronic label, having an identification code, for display;
loading identification data and customer information in an electronic tag, said tag being adapted to transmit said data via wireless communication;
distributing said tag to a customer;
transmitting said tag identification to said label when said tag is in communication range of said label;
transmitting of said tag identification received by said label and said label identification to said in-store processor; and
processing said tag identification and said label identification in a manner to dynamically track said tag.

12. The method of claim 11, further including the steps of:
transmitting promotional offer data contingent on customer criteria to said labels;
transmitting from said tag to said label within communication range said customer data;
determining if said customer data received by said label satisfies said customer criteria for the promotional offer; and
displaying said promotional offer if said customer criteria is satisfied.

13. The method of claim 11, further including the step of transmitting said item price data to a point of sale terminal.

14. The method of claim 11, further including the step of transmitting said item price data to a point of sale terminal, and wherein said dynamic tag tracking is done in real time and stored for analysis.
